# EUROPEAN PATENT APPLICATION

(11) **EP 4 675 600 A1**
(43) Date of publication of application: **07.01.2026**
(21) Application number: 24773928.7
(22) Date of filing: 07.03.2024
(51) Int. Cl.: G09G 3/32, G02B 13/00

(54) **DISPLAY DEVICE AND PIXEL CALIBRATION METHOD THEREFOR**

(30) Priority: 20.03.2023 CN 202310298260
(71) Applicant: HUAWEI TECHNOLOGIES CO., LTD., Shenzhen, Guangdong 518129 (CN)
(72) Inventor: LUO, Kun, Shenzhen, Guangdong 518129 (CN); ZHANG, Cuiping, Shenzhen, Guangdong 518129 (CN); ZHAO, Pengfei, Shenzhen, Guangdong 518129 (CN)
(74) Representative: Körber, Martin Hans
(86) International application number: PCT/CN2024/080615
(87) International publication number: WO 2024/193361

(57) **Abstract**

This application provides a display device and a pixel calibration method therefor, and relates to the field of display technologies. When an automatic calibration function is enabled, and a preset automatic calibration condition is met, a pixel calibration strategy corresponding to a temperature range within which a current temperature of a display module falls is found from a correspondence between a temperature range and a pixel calibration strategy. A to-be-calibrated display panel is found according to the pixel calibration strategy. A pixel that is used to emit light on the to-be-calibrated display panel is determined. Even if pixels that are used to emit light on display panels are misaligned because expansion degrees of the display panels are different, the pixels that are used to emit the light on the display panels can still be one-to-one aligned through calibration. This avoids a misalignment of a display picture when implementing full-color display, thereby improving display effect.

## Description

### CROSS-REFERENCE TO RELATED APPLICATIONS

This application claims priority to Chinese Patent Application No. 202310298260.0, filed with the China National Intellectual Property Administration on March 20, 2023 and entitled "DISPLAY DEVICE AND PIXEL CALIBRATION METHOD THEREFOR", which is incorporated herein by reference in its entirety.

### TECHNICAL FIELD

This application relates to the field of display technologies, and in particular, to a display device and a pixel calibration method therefor.

### BACKGROUND

An augmented reality (Augmented Reality, AR) display device uses a display technology in which real-world information is collected in real time and virtual information, an image, and the like are combined with a real world. In terms of information display, the AR display device is no longer limited to a physical screen, but may perform display in entire physical space, and may display the virtual information in real time in a virtual-real combination manner based on a physical entity.

To improve a resolution of the AR display device, a structure of the AR display device may be specially designed. For example, the AR display device may include a display module, a light combining element, and a lens component. The display module includes three monochrome display panels: a blue display panel, a red display panel, and a green display panel. The light combining element includes three light incident surfaces and one light emergent surface. The three monochrome display panels are respectively disposed on the three light incident surfaces. The lens component is located on the light emergent surface. The light combining element combines light emitted from the three monochrome display panels, so that combined light forms an image after passing through the lens component. Because light emitted from pixels on the three monochrome display panels forms a full-color pixel after superposition, a quantity of full-color pixels on the display module can be effectively increased, thereby improving the resolution of the AR display device.

In addition, to avoid a misalignment during display, the pixels on the three monochrome display panels need to be aligned, so that pixels in colors are one-to-one aligned, to implement full-color display. However, in a use process of the AR display device, because expansion degrees of the three monochrome display panels are different, a new deviation is generated between the three monochrome display panels that are originally accurately aligned, resulting in a misalignment of a display picture.

### SUMMARY

This application provides a display device and a pixel calibration method therefor, to calibrate a pixel on each display panel, so that pixels that are used to emit light on the display panels are one-to-one aligned, to avoid a misalignment of a display picture, thereby improving display effect.

According to a first aspect, an embodiment of this application provides a pixel calibration method for a display device. First, a structure of the display device is described. The display device includes a display module, a light combining element, and a lens component. The display module includes a plurality of display panels. At least one of the plurality of display panels is a monochrome display panel. For example, two display panels are disposed, and in the two display panels, one is a monochrome display panel (to be specific, colors of light emitted from pixels on the display panel are all the same), and the other is a dual-color display panel (to be specific, the display panel has a pixel that emits light in two colors); or three display panels are disposed, the three display panels are all monochrome display panels, and the three display panels are configured to emit light in different colors, for example, a blue display panel emitting blue light, a red display panel emitting red light, and a green display panel emitting green light. The display panel includes a plurality of pixels. During display of the display panel, a part of the plurality of pixels emits light. In other words, each display panel includes many pixels, and for any display panel, during display, only a part of pixels emits light, and a remaining pixel do not emit light. The light combining element includes a plurality of light incident surfaces and a light emergent surface. The plurality of display panels are respectively disposed on the light incident surfaces. The lens component is located on the light emergent surface. The light combining element is configured to combine light emitted from the plurality of display panels, so that combined light can form an image after passing through the lens component. In some embodiments, the display device may be an AR display device. Certainly, the display device may alternatively be another near-eye display device. This is not limited herein.

Based on the foregoing display device, the pixel calibration method provided in this embodiment of this application may include:
obtaining a current temperature of the display module when an automatic calibration function is enabled and a preset automatic calibration condition is met;
determining, based on a preset correspondence between a temperature range and a pixel calibration strategy, a pixel calibration strategy corresponding to a temperature range within which the current temperature falls; and
finding a to-be-calibrated display panel from the plurality of display panels according to the determined pixel calibration strategy, and determining a pixel that is used to emit light on the to-be-calibrated display panel, so that pixels that are used to emit light on the display panels are one-to-one aligned.

In this way, when the automatic calibration function is enabled, and the preset automatic calibration condition is met, a pixel calibration process can be automatically performed by performing the foregoing pixel calibration process, so that the pixels that are used to emit the light on the display panels are one-to-one aligned after calibration, to eliminate a misalignment phenomenon, so as to improve display effect of the display device.

In some embodiments, a function button for enabling and disabling the automatic calibration function may be set in the display device. The function button may be a mechanical button disposed on a surface of the display device, or a virtual button set on a display screen of the display device. When the function button is tapped, the automatic calibration function is enabled. When the function button is tapped again, the automatic calibration function is disabled. Certainly, an operation manner of the function button and a control manner of enabling and disabling the automatic calibration function are not limited to those in the foregoing example, and all fall within the protection scope of embodiments of this application provided that the automatic calibration function can be enabled and disabled through the function button.

In some embodiments, the preset automatic calibration condition may include: A preset pixel calibration period arrives; and/or when the display device is an AR display device, a packing away moment of the AR display device arrives. For example, the display device is AR glasses. When the AR glasses have foldable temples, the preset automatic calibration condition is met when the foldable temples are folded, and a pixel calibration process is triggered. Certainly, when the display device is another AR display device or does not have the foldable temples, the preset automatic calibration condition may alternatively be met when the display device is packed away and put into a protective case or a protective box, and the pixel calibration process is triggered.

In addition, when the preset automatic calibration condition includes that the preset pixel calibration period arrives, the pixel calibration process is triggered each time the preset pixel calibration period arrives and the automatic calibration function is enabled. The pixel calibration period may be set based on factors such as a calibration precision requirement, an expansion difference between the display panels, and a requirement on the display effect. The pixel calibration period may be set to be longer or shorter. This is not limited herein. When the preset automatic calibration condition includes that the packing away moment of the AR display device arrives, the pixel calibration process is triggered as long as the AR display device is packed away, to perform pixel calibration. Certainly, if that the preset pixel calibration period arrives is considered as a condition A, and that the packing away moment of the AR display device arrives is considered as a condition B, the preset automatic calibration condition may further include both the condition A and the condition B. In this way, the pixel calibration process is triggered once when the AR display device is packed away, and the pixel calibration process is triggered once each time the pixel calibration period arrives except for this moment. This can ensure the display effect of the display device in real time, and avoid a pixel misalignment phenomenon.

In some embodiments, the current temperature of the display module may be obtained through a temperature sensor disposed in the display module. One temperature sensor may be disposed. The temperature sensor may be disposed at any location in the display module, for example but not limited to, a non-light-emitting surface of any display panel. A temperature collected by the temperature sensor is a temperature of the display module. In this way, the temperature of the display module can be obtained through only one temperature sensor. This simplifies the structure of the display device, and can further simplify a manner of obtaining the temperature. Alternatively, a plurality of temperature sensors may be disposed. The temperature sensors may be respectively disposed on non-light-emitting surfaces of the display panels. In this way, a plurality of temperatures can be collected by the temperature sensors, and then an average value of the temperatures, a largest value of the temperatures, or an intermediate value of the temperatures is calculated, selected, or selected as the temperature of the display module. In this way, temperatures at a plurality of different locations can be obtained, so that an appropriate temperature can be selected as the temperature of the display module based on an actual requirement, and the obtained temperature of the display module is more accurate and reliable. This helps improve pixel calibration accuracy.

In some embodiments, a pixel misalignment caused by an operating ambient temperature of the display device may be measured in advance, to find a corresponding pixel calibration strategy, so as to form the correspondence between a temperature range and a pixel calibration strategy. In this way, when the current temperature of the display module is obtained, the pixel calibration strategy corresponding to the temperature range within which the current temperature falls is found from the correspondence.

In some embodiments, when the automatic calibration function is enabled but the preset automatic calibration condition is not met, it indicates that pixel calibration is not required currently. In this case, the pixels that are used to emit the light on the display panels can be kept unchanged. For example, if pixels on the display panels are driven currently to emit light, these pixels are still driven subsequently to emit the light. This keeps a current alignment between the display panels, and keeps current display effect of the display device.

In some embodiments, after the automatic calibration function is enabled, when the automatic calibration condition is met for an i^{th} (i is a positive integer) time, a pixel calibration strategy (which is assumed to be a pixel calibration strategy i) corresponding to a temperature range (which is assumed to be a temperature range i) within which a temperature of the display module falls may be found from the correspondence, and a corresponding pixel calibration operation is performed. When the automatic calibration condition is met for an (i+1)^{th} time, a pixel calibration strategy corresponding to a temperature range within which a temperature of the display module falls may still be found from the correspondence.

However, if the temperature range that is found at the (i+1)^{th} time and within which the temperature of the display module falls is still the temperature range i, it indicates that the temperature of the display module obtained at the i^{th} time and the temperature of the display module obtained at the (i+1)^{th} time fall within a same temperature range, and a difference between the temperature of the display module obtained at the i^{th} time and the temperature of the display module obtained at the (i+1)^{th} time is small. Because the pixel calibration operation has been performed at the i^{th} time, there is a high probability that no misalignment phenomenon exists currently between the display panels. Therefore, the pixel calibration may not need to be performed again at the (i+1)^{th} time, and the pixels that are used to emit the light on the display panels may be kept unchanged, thereby keeping a current status of each display panel.

If the temperature range that is found at the (i+1)^{th} time and within which the temperature of the display module falls is not the temperature range i, it indicates that the temperature of the display module obtained at the i^{th} time and the temperature of the display module obtained at the (i+1)^{th} time do not fall within the same temperature range, and the difference between the temperature of the display module obtained at the i^{th} time and the temperature of the display module obtained at the (i+1)^{th} time is large. In this case, even if the pixel calibration operation has been performed at the i^{th} time, there is still a high probability that a misalignment phenomenon exists currently. Therefore, at the (i+1)^{th} time, the found pixel calibration strategy still needs to be used to perform the pixel calibration, to eliminate the misalignment phenomenon, thereby improving the display effect.

In this way, a processing amount and a computing amount of a controller can be effectively reduced, power consumption of the display device can be reduced, and the display effect of the display device can be effectively improved.

The foregoing describes how to perform the pixel calibration when the automatic calibration function is enabled. However, in an actual situation, the automatic calibration function may not be enabled. In this case, the pixel calibration may be implemented according to the following process:
obtaining an image presented through the lens component;
determining whether a pixel in the obtained image is misaligned; and
if the pixel in the obtained image is misaligned, finding a to-be-calibrated display panel from the plurality of display panels based on the misalignment, and determining a pixel that is used to emit light on the to-be-calibrated display panel, so that the pixels that are used to emit the light on the display panels are one-to-one aligned; or
if the pixel in the obtained image is not misaligned, keeping the pixels that are used to emit the light on the display panels unchanged.

In this way, even if the automatic calibration function is not enabled, the pixel calibration can still be implemented by obtaining, analyzing, and processing the image, thereby improving the display effect.

In some embodiments, the image presented through the lens component may be obtained based on a preset image capture period. The image capture period may be set to be longer or shorter based on an actual requirement. This is not limited herein. The image may alternatively be obtained in response to a pixel calibration instruction entered by a user, to meet a use requirement of the user. When entering the pixel calibration instruction, the user may assign a pixel calibration enabling function to the function button described in the foregoing content, or may separately set a function button for enabling the pixel calibration. When the user taps the function button having the pixel calibration enabling function, it indicates that the user enters the pixel calibration instruction.

In some embodiments, when the display device is an AR display device, and has temples, a human eye model camera may be disposed in the temple. When the temple is folded, the image presented through the lens component is taken through the human eye model camera, to obtain a corresponding image.

In some embodiments, when the image presented through the lens component is obtained, an image processing algorithm may be used to extract each color pixel that emits light, and then whether each color pixel that emits the light is misaligned is compared, to determine whether the pixel in the image is misaligned. The image processing algorithm may be any algorithm that is well known to a person skilled in the art and that can be used to extract each pixel, and may be specifically selected based on an actual requirement. This is not limited herein.

In some embodiments, regardless of whether the automatic calibration function is enabled, a result of the pixel calibration may be verified after the pixel calibration is performed, to determine whether the misaligned pixel is eliminated through the pixel calibration. Therefore, a specific verification process may include:
obtaining a calibrated image presented through the lens component after calibration, where the calibrated image may be automatically obtained after a preset time starting from completion of the pixel calibration, the preset time may be set based on an actual requirement, and this is not limited herein; or a verification function may be assigned to the function button described in the foregoing content, or a verification button may be newly added, and the verification process is triggered by tapping the button having the verification function; and
determining whether a pixel in the calibrated image is misaligned.

If the pixel in the calibrated image is misaligned, it indicates that precision of the pixel calibration is not high enough, and the pixel calibration still needs to be performed. Therefore, a to-be-calibrated display panel may be refound from the plurality of display panels based on a misalignment, and a pixel that is used to emit light on the to-be-calibrated display panel may be redetermined, until the misalignment phenomenon disappears.

If the pixel in the calibrated image is not misaligned, it indicates that the precision of the pixel calibration is high, and no misalignment phenomenon exists. Therefore, it can be determined that the pixels that are used to emit the light on the display panels are one-to-one aligned.

In this way, the pixel misalignment phenomenon can be eliminated by performing the pixel calibration process and the verification process, so that the pixels that are used to emit the light on the display panels are one-to-one aligned, thereby effectively improving the display effect.

In some embodiments, before the display device is delivered, after the display module, the light combining element, and the lens component are assembled, it is required to test whether the pixels that are used to emit the light on the display panels are one-to-one aligned. If the misalignment phenomenon occurs, the pixel calibration process and the verification process need to be used, until the misalignment phenomenon is eliminated, and then another structure is assembled. In this way, the pixels that are used to emit the light on the display panels in the display device that is just delivered are one-to-one aligned.

In addition, when whether the pixels that are used to emit the light on the display panels are one-to-one aligned is tested, if a structure after the display module, the light combining element, and the lens component are assembled is referred to as a semi-finished product, an image displayed by the semi-finished product may be projected onto an imaging interface (for example, a projection screen). Then, an image presented on the imaging interface is captured through a camera, to obtain the image presented through the lens component. Alternatively, if the semi-finished product is used in an AR display device, the semi-finished product may be further assembled with a waveguide lens element. An image formed by image light emitted through the waveguide lens element is taken through the human eye model camera, to obtain the image presented through the lens component. In addition, when the camera or the human eye model camera takes the image, a placement position needs to be set, that is, the camera or the human eye model camera needs to be disposed at an appropriate location, to take the image presented through the lens component. A specific placement position of the camera or the human eye model camera may be set based on an image display principle. For example, when the waveguide lens element is provided, the human eye model camera is disposed in an eyebox region (namely, a region in which an image presented through the waveguide lens element can be seen). When the image displayed by the semi-finished product is projected onto the imaging interface, the camera is disposed in a region in which the image on the imaging interface can be seen. This is not limited herein.

According to a second aspect, an embodiment of this application further provides a display device. The display device may include a display module, a light combining element, a lens component, and a controller. A manner of disposing the display module, the light combining element, and the lens component is the same as the manner of disposing the display module, the light combining element, and the lens component described in the foregoing content. Details are not described herein again. The controller may be configured to calibrate, by using the pixel calibration method according to the first aspect, at least a part of pixels that are used to emit light on a display panel. In this way, in a use process of the display device, even if the pixels that are used to emit the light on the display panels are misaligned because expansion degrees of the display panels are different, the controller can still adjust the misaligned pixel to eliminate the misalignment, so that pixels emitting light in different colors are one-to-one aligned during imaging. In this way, light emitted from pixels emitting light in different colors forms a full-color pixel after light combining, thereby improving a display effect when implementing full-color display.

In some embodiments, in addition to the foregoing structure, the display device may further include another structure that may be configured to implement a function of the display device, for example, but not limited to, a framework. This is not limited herein.

According to a third aspect, an embodiment of this application further provides a computer storage medium. The computer storage medium stores executable instructions. When the executable instructions are executed by a computer, the control method according to the first aspect is performed.

### BRIEF DESCRIPTION OF DRAWINGS

FIG. 1 is a diagram of a structure of a display device according to an embodiment of this application;
FIG. 2 is a flowchart of a pixel calibration method according to an embodiment of this application;
FIG. 3 is a diagram of pixel calibration effect according to an embodiment of this application;
FIG. 4 is a diagram of a pixel calibration manner before delivery according to an embodiment of this application;
FIG. 5 is a diagram of another pixel calibration manner before delivery according to an embodiment of this application; and
FIG. 6 is a flowchart of a specific embodiment according to an embodiment of this application.

10: display module; 11: blue display panel; 12: red display panel; 13: green display panel; 20: light combining element; 30: lens component; 40: controller; S1, S2, and S3: light incident surfaces; S4: light emergent surface; m1: semi-finished product; m2: imaging interface; m3: camera; m4: waveguide lens element; and m5: human eye model camera.

### DESCRIPTION OF EMBODIMENTS

To make objectives, technical solutions, and advantages of this application clearer, the following further describes this application in detail with reference to accompanying drawings.

It should be noted that same reference numerals in the accompanying drawings of this application denote same or similar structures. Therefore, repeated descriptions thereof are omitted. Terms that are described in this application and that express a position and a direction are all described by using the accompanying drawings as examples, but changes may also be made as required, and all the changes fall within the protection scope of this application. The accompanying drawings in this application are used merely to illustrate a relative location relationship and do not represent an actual scale.

An AR display device uses a display technology in which real-world information is collected in real time and virtual information, an image, and the like are combined with a real world. In terms of information display, the AR display device is no longer limited to a physical screen, but may perform display in entire physical space, and may display the virtual information in real time in a virtual-real combination manner based on a physical entity.

A micro LED technology is a technology in which a self-luminous micron-level light emitting diode (Light Emitting Diode, LED) is used as an independent light emitting pixel. A micro LED has advantages such as a small size, high integration, self-luminousness, high brightness, and a long service life. Therefore, the micro LED has a quite good application prospect in fields such as tablet display, wearable devices, and AR/VR (Virtual Reality, virtual reality).

Based on a display principle and a production technology, a display device based on the micro LED mainly includes two architectures: a spatial separation architecture and a color combination architecture.

In the spatial separation architecture, a single multi-color display panel is used for full-color light emitting. Each pixel on the multi-color display panel includes a plurality of spatially separated subpixels in different colors, for example, a red subpixel, a blue subpixel, and a green subpixel, and each subpixel is one micro LED. Due to a limited resolution of a human eye, when a size of the subpixel is small enough, the human eye cannot distinguish spatial separation of the subpixel, but the subpixel is considered as a full-color pixel, thereby implementing full-color display. In the spatial separation architecture, a production technique of the micro LED is complex, and is limited to a growth condition of a luminescent material, and mass transfer needs to be performed a plurality of times. Consequently, the sizes of the subpixels cannot be reduced without limit, resulting in a limitation on an increase of a resolution of a display panel in this architecture.

In the color combination architecture, a plurality of monochrome display panels are used for full-color light emitting. Colors of light emitted from pixels on each monochrome display panel are the same. Each pixel on each monochrome display panel is one micro LED. The monochrome display panels are respectively disposed on light incident surfaces of a light combining element. Light emitted from the monochrome display panels is combined by the light combining element and then forms an image through a lens component. Each pixel on each monochrome display panel forms a subpixel in a full-color pixel. Therefore, a quantity of full-color pixels can be effectively increased to improve a display resolution. Compared with that in the spatial separation architecture, the resolution can be increased by three times.

In addition, in the color combination architecture, to avoid a misalignment during display, the pixels on the monochrome display panels need to be aligned, so that pixels in colors are one-to-one aligned, to implement full-color display. However, in a use process of the AR display device, expansion degrees are different because power consumption and heat of the monochrome display panels are different. Consequently, a new deviation is generated between the monochrome display panels that are originally accurately aligned, finally resulting in a misalignment of a display picture.

In view of this, embodiments of this application provide a display device and a pixel calibration method therefor, to calibrate a pixel on each display panel, so that pixels that are used to emit light on the display panels are one-to-one aligned, to avoid a misalignment of a display picture, thereby improving display effect.

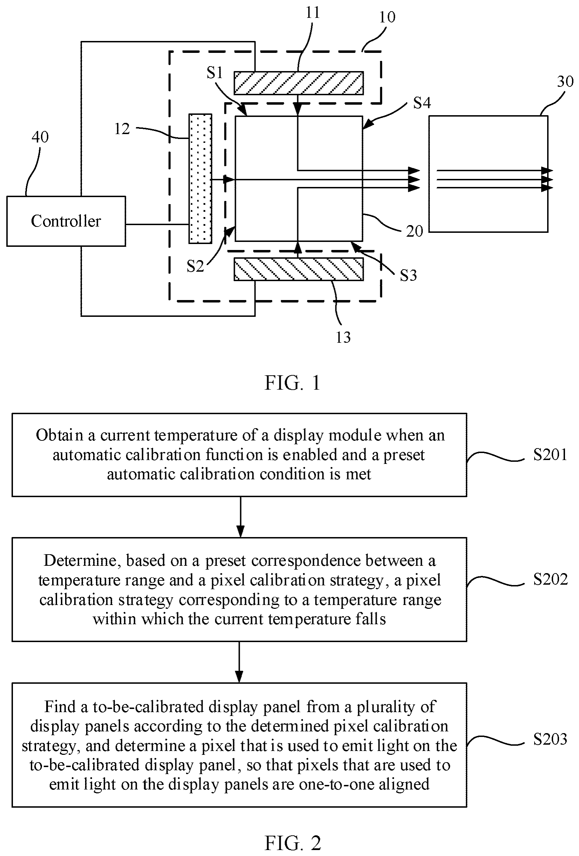

The solutions of this application may be applied to a display device shown in FIG. 1. As shown in FIG. 1, the display device may include a display module 10, a light combining element 20, and a lens component 30. The display module 10 includes a plurality of display panels (structures indicated by 11, 12, and 13 in FIG. 1). At least one of the plurality of display panels is a monochrome display panel. For example, two display panels are disposed, and in the two display panels, one is a monochrome display panel (to be specific, colors of light emitted from pixels on the display panel are all the same), and the other is a dual-color display panel (to be specific, the display panel has a pixel that emits light in two colors), not shown in the figure; or three display panels are disposed, the three display panels are all monochrome display panels, and the three display panels are configured to emit light in different colors, for example, a blue display panel (a structure indicated by 11) emitting blue light, a red display panel (a structure indicated by 12) emitting red light, and a green display panel (a structure indicated by 13) emitting green light, as shown in FIG. 1.

The display panel includes a plurality of pixels (not shown in FIG. 1). During display of the display panel, a part of the plurality of pixels emits light. In other words, each display panel includes many pixels, and for any display panel, during display, only a part of pixels emits light, and a remaining pixel do not emit light.

The light combining element 20 includes a plurality of light incident surfaces (surfaces indicated by S1, S2, and S3) and a light emergent surface S4. The plurality of display panels are respectively disposed on the light incident surfaces. As shown in FIG. 1, the blue display panel indicated by 11 is located on the light incident surface S1, the red display panel indicated by 12 is located on the light incident surface S2, and the green display panel indicated by 13 is located on the light incident surface S3. The lens component 30 is located on the light emergent surface S4. The light combining element 20 is configured to combine light emitted from the plurality of display panels, so that combined light can form an image after passing through the lens component 30.

In some embodiments, the display device may be an AR display device. Certainly, the display device may alternatively be another near-eye display device. This is not limited herein.

In some embodiments, the light combining element may be but is not limited to a light combining prism. The lens component may include at least one optical element. For example, the optical element may be a convex lens or a concave lens. During specific implementation, a type and a quantity of optical elements in the lens component may be set based on an actual requirement. This is not limited herein.

In some embodiments, as shown in FIG. 1, the display device may further include a controller 40 connected to the display module 10. The controller 40 may be configured to:
receive a to-be-displayed signal;
determine a drive voltage corresponding to the to-be-displayed signal, and transmit the drive voltage to a pixel on each display panel, to drive the pixel to emit light; and
additionally, when pixel calibration needs to be performed, calibrate, by using a pixel calibration method described in the following content, at least a part of the pixels that are used to emit light on the display panel, so that pixels that are used to emit light on the display panels are one-to-one aligned.

In this way, in a use process of the display device, even if the pixels that are used to emit the light on the display panels are misaligned because expansion degrees of the display panels are different, the controller can still adjust the misaligned pixel to eliminate the misalignment, so that each red pixel that is used to emit red light, each blue pixel that is used to emit blue light, and each green pixel that is used to emit green light are one-to-one aligned during imaging. Therefore, the light emitted from each red pixel, each blue pixel, and each green pixel forms a full-color pixel after light combining, thereby improving a display effect when implementing full-color display.

The following describes the pixel calibration method in detail.

FIG. 2 is a flowchart of the pixel calibration method. The method may include the following steps.

S201: Obtain a current temperature of a display module when an automatic calibration function is enabled and a preset automatic calibration condition is met.

In some embodiments, a function button for enabling and disabling the automatic calibration function may be set in a display device. The function button may be a mechanical button disposed on a surface of the display device, or a virtual button set on a display screen of the display device. When the function button is tapped, the automatic calibration function is enabled. When the function button is tapped again, the automatic calibration function is disabled. Certainly, an operation manner of the function button and a control manner of enabling and disabling the automatic calibration function are not limited to those in the foregoing example, and all fall within the protection scope of embodiments of this application provided that the automatic calibration function can be enabled and disabled through the function button.

In some embodiments, the preset automatic calibration condition may include: A preset pixel calibration period arrives; and/or when the display device is an AR display device, a packing away moment of the AR display device arrives. For example, the display device is AR glasses. When the AR glasses have foldable temples, the preset automatic calibration condition is met when the foldable temples are folded, and a pixel calibration process is triggered. Certainly, when the display device is another AR display device or does not have the foldable temples, the preset automatic calibration condition may alternatively be met when the display device is packed away and put into a protective case or a protective box, and the pixel calibration process is triggered.

In addition, when the preset automatic calibration condition includes that the preset pixel calibration period arrives, the pixel calibration process is triggered each time the preset pixel calibration period arrives and the automatic calibration function is enabled. The pixel calibration period may be set based on factors such as a calibration precision requirement, an expansion difference between the display panels, and a requirement on display effect. The pixel calibration period may be set to be longer or shorter. This is not limited herein. When the preset automatic calibration condition includes that the packing away moment of the AR display device arrives, the pixel calibration process is triggered as long as the AR display device is packed away, to perform pixel calibration. Certainly, if that the preset pixel calibration period arrives is considered as a condition A, and that the packing away moment of the AR display device arrives is considered as a condition B, the preset automatic calibration condition may further include both the condition A and the condition B. In this way, the pixel calibration process is triggered once when the AR display device is packed away, and the pixel calibration process is triggered once each time the pixel calibration period arrives except for this moment. This can ensure the display effect of the display device in real time, and avoid a pixel misalignment phenomenon.

In some embodiments, the current temperature of the display module may be obtained through a temperature sensor disposed in the display module. One temperature sensor may be disposed. The temperature sensor may be disposed at any location in the display module, for example but not limited to, a non-light-emitting surface of any display panel. A temperature collected by the temperature sensor is a temperature of the display module. In this way, the temperature of the display module can be obtained through only one temperature sensor. This simplifies the structure of the display device, and can further simplify a manner of obtaining the temperature. Alternatively, a plurality of temperature sensors may be disposed. The temperature sensors may be respectively disposed on non-light-emitting surfaces of the display panels. In this way, a plurality of temperatures can be collected by the temperature sensors, and then an average value of the temperatures, a largest value of the temperatures, or an intermediate value of the temperatures is calculated, selected, or selected as the temperature of the display module. In this way, temperatures at a plurality of different locations can be obtained, so that an appropriate temperature can be selected as the temperature of the display module based on an actual requirement, and the obtained temperature of the display module is more accurate and reliable. This helps improve pixel calibration accuracy.

S202: Determine, based on a preset correspondence between a temperature range and a pixel calibration strategy, a pixel calibration strategy corresponding to a temperature range within which the current temperature falls.

In some embodiments, a pixel misalignment caused by an operating ambient temperature of the display device may be measured in advance, to find a corresponding pixel calibration strategy, so as to form the correspondence between a temperature range and a pixel calibration strategy. In this way, when the current temperature of the display module is obtained, the pixel calibration strategy corresponding to the temperature range within which the current temperature falls is found from the correspondence.

S203: Find a to-be-calibrated display panel from a plurality of display panels according to the determined pixel calibration strategy, and determine a pixel that is used to emit light on the to-be-calibrated display panel, so that pixels that are used to emit light on the display panels are one-to-one aligned.

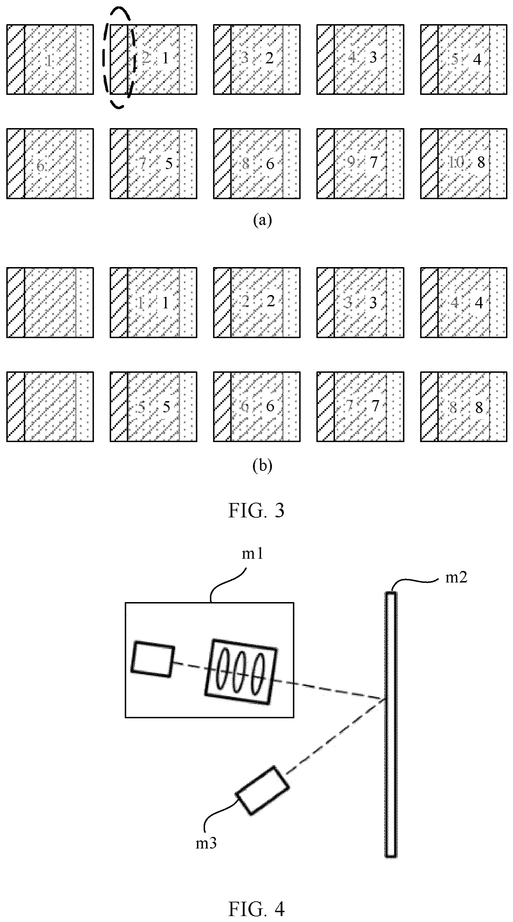

For example, as shown in FIG. 3, pixels that are used to emit light on a green display panel and a red display panel are misaligned, and only some pixels are shown in the figure. A green pixel is represented by a square block filled with slashes, and a green pixel used to emit light during display is represented by a square block filled with a number and slashes. A red pixel is represented by a square block filled with black dots, and a red pixel used to emit light during display is represented by a square block filled with a number and black dots. Herein, (a) in FIG. 3 shows a display condition before the pixel calibration, and (b) in FIG. 3 shows a display condition after the pixel calibration. Before the pixel calibration, a red pixel corresponding to a green pixel that emits light in a 1^{st} column on the leftmost side shown in the figure does not emit light. Therefore, the green pixel that emits the light in the column is not aligned with a red pixel that emits light. A green pixel that emits light in another column shown in the figure and a red pixel that emits light are one-to-one aligned. As a result, the red pixel that emits the light and the green pixel that emits the light are misaligned, and the green pixel that emits the light is misaligned with the red pixel that emits the light by one pixel location to the left, as shown in (a) in FIG. 3. In this case, the pixel calibration strategy may include: shifting the green pixel that emits the light by one pixel location to the right, or shifting the red pixel that emits the light by one pixel location to the left. In this way, after the pixel calibration, the green pixel that emits the light and the red pixel that emits the light can be one-to-one aligned, as shown in (b) in FIG. 3. It should be understood that, in FIG. 3, there is a slight misalignment (as shown in a dashed circle) between the red pixel that emits the light and the green pixel that emits the light that are one-to-one aligned. Such a slight misalignment is merely intended to help clearly view the green pixel at a lower layer. In an actual situation, such a misalignment does not occur when the alignment is accurate.

If the pixel calibration strategy is shifting the green pixel that emits the light by one pixel location to the right, the to-be-calibrated display panel is the green display panel, and green pixels in the 1^{st} column on the leftmost side shown in (a) in FIG. 3 (namely, square blocks filled with a number 1 and a number 6 and slashes) no longer emit light during display. After the pixel calibration, as shown in (b) in FIG. 3, the red pixel that emits the light and the green pixel that emits the light may be one-to-one aligned. If the pixel calibration strategy is shifting the red pixel that emits the light by one pixel location to the left, the to-be-calibrated display panel is the red display panel. Certainly, the pixel calibration strategy may alternatively be: shifting the green pixel that emits the light by half a pixel location to the right, and shifting the red pixel that emits the light by half a pixel location to the left. In this case, the to-be-calibrated display panel is the green display panel and the red display panel.

In conclusion, when the automatic calibration function is enabled, and the preset automatic calibration condition is met, a pixel calibration process can be automatically performed by performing S201 to S203, so that the pixels that are used to emit the light on the display panels are one-to-one aligned after calibration, to eliminate a misalignment phenomenon, so as to improve the display effect of the display device.

In some embodiments, when the automatic calibration function is enabled but the preset automatic calibration condition is not met, it indicates that the pixel calibration is not required currently. In this case, the pixels that are used to emit the light on the display panels can be kept unchanged. For example, if pixels on the display panels are driven currently to emit light, these pixels are still driven subsequently to emit the light. This keeps a current alignment between the display panels, and keeps current display effect of the display device.

In some embodiments, after the automatic calibration function is enabled, when the automatic calibration condition is met for an i^{th} (i is a positive integer) time, a pixel calibration strategy (which is assumed to be a pixel calibration strategy i) corresponding to a temperature range (which is assumed to be a temperature range i) within which a temperature of the display module falls may be found from the correspondence, and a corresponding pixel calibration operation is performed. When the automatic calibration condition is met for an (i+1)^{th} time, a pixel calibration strategy corresponding to a temperature range within which a temperature of the display module falls may still be found from the correspondence.

However, if the temperature range that is found at the (i+1)^{th} time and within which the temperature of the display module falls is still the temperature range i, it indicates that the temperature of the display module obtained at the i^{th} time and the temperature of the display module obtained at the (i+1)^{th} time fall within a same temperature range, and a difference between the temperature of the display module obtained at the i^{th} time and the temperature of the display module obtained at the (i+1)^{th} time is small. Because the pixel calibration operation has been performed at the i^{th} time, there is a high probability that no misalignment phenomenon exists currently between the display panels. Therefore, the pixel calibration may not need to be performed again at the (i+1)^{th} time, and the pixels that are used to emit the light on the display panels may be kept unchanged, thereby keeping a current status of each display panel.

If the temperature range that is found at the (i+1)^{th} time and within which the temperature of the display module falls is not the temperature range i, it indicates that the temperature of the display module obtained at the i^{th} time and the temperature of the display module obtained at the (i+1)^{th} time do not fall within the same temperature range, and the difference between the temperature of the display module obtained at the i^{th} time and the temperature of the display module obtained at the (i+1)^{th} time is large. In this case, even if the pixel calibration operation has been performed at the i^{th} time, there is still a high probability that a misalignment phenomenon exists currently. Therefore, at the (i+1)^{th} time, the found pixel calibration strategy still needs to be used to perform the pixel calibration, to eliminate the misalignment phenomenon, thereby improving the display effect.

In this way, a processing amount and a computing amount of a controller can be effectively reduced, power consumption of the display device can be reduced, and the display effect of the display device can be effectively improved.

The foregoing describes how to perform the pixel calibration when the automatic calibration function is enabled. However, in an actual situation, the automatic calibration function may not be enabled. In this case, the pixel calibration may be implemented according to the following process:
Step 1.1: Obtain an image presented through a lens component.

In some embodiments, the image presented through the lens component may be obtained based on a preset image capture period. The image capture period may be set to be longer or shorter based on an actual requirement. This is not limited herein. The image may alternatively be obtained in response to a pixel calibration instruction entered by a user, to meet a use requirement of the user. When entering the pixel calibration instruction, the user may assign a pixel calibration enabling function to the function button described in the foregoing content, or may separately set a function button for enabling the pixel calibration. When the user taps the function button having the pixel calibration enabling function, it indicates that the user enters the pixel calibration instruction.

In some embodiments, when the display device is an AR display device, and has temples, a human eye model camera may be disposed in the temple. When the temple is folded, the image presented through the lens component is taken through the human eye model camera, to obtain a corresponding image.

It should be understood that the pixel calibration enabling function may be understood as follows: Selecting the function triggers the pixel calibration process, to perform step 1.1 to step 1.4. The automatic calibration function may be understood as follows: Selecting the function triggers an automatic calibration procedure, to perform S201 to S203.

Step 1.2: Determine whether a pixel in the obtained image is misaligned; and perform step 1.3 if the pixel in the obtained image is misaligned; or perform step 1.4 if the pixel in the obtained image is not misaligned.

In some embodiments, when the image presented through the lens component is obtained, an image processing algorithm may be used to extract each color pixel that emits light, and then whether each color pixel that emits the light is misaligned is compared, to determine whether the pixel in the image is misaligned. The image processing algorithm may be any algorithm that is well known to a person skilled in the art and that can be used to extract each pixel, and may be specifically selected based on an actual requirement. This is not limited herein.

Step 1.3: Find a to-be-calibrated display panel from the plurality of display panels based on the misalignment, and determine a pixel that is used to emit light on the to-be-calibrated display panel, so that the pixels that are used to emit the light on the display panels are one-to-one aligned; and end the procedure.

Step 1.4: Keep the pixels that are used to emit the light on the display panels unchanged.

In this way, even if the automatic calibration function is not enabled, the pixel calibration can still be implemented by obtaining, analyzing, and processing the image, thereby improving the display effect.

In some embodiments, regardless of whether the automatic calibration function is enabled, a result of the pixel calibration may be verified after the pixel calibration is performed, to determine whether the misaligned pixel is eliminated through the pixel calibration. Therefore, after step 1.1 to step 1.4 are performed or after S201 to S203 are performed, the following verification procedure may be further performed.

Step 2.1: Obtain a calibrated image presented through the lens component after calibration.

In some embodiments, the calibrated image may be automatically obtained after a preset time starting from completion of the pixel calibration, and the preset time may be set based on an actual requirement. This is not limited herein. Alternatively, a verification function may be assigned to the function button described in the foregoing content, or a verification button may be newly added, and the button having the verification function is tapped to trigger performing of step 2.1 to step 2.4 for verification.

Step 2.2: Determine whether a pixel in the calibrated image is misaligned. If the pixel in the calibrated image is misaligned, it indicates that precision of the pixel calibration is not high enough, the pixel calibration still needs to be continued, and therefore, step 2.3 may be performed. If the pixel in the calibrated image is not misaligned, it indicates that the precision of the pixel calibration is high, no misalignment phenomenon exists, and therefore, step 2.4 may be performed.

In some embodiments, for a method for determining whether there is a misalignment in the calibrated image in step 2.2, refer to the method in step 1.2. A repeated part is not described again.

Step 2.3: Refind a to-be-calibrated display panel from the plurality of display panels based on the misalignment, and redetermine a pixel that is used to emit light on the to-be-calibrated display panel; and return to step 2.1.

Step 2.4: Determine that the pixels that are used to emit the light on the display panels are one-to-one aligned.

In this way, the pixel misalignment phenomenon can be eliminated by performing the pixel calibration process and the verification process, so that the pixels that are used to emit the light on the display panels are one-to-one aligned, thereby effectively improving the display effect.

In some embodiments, before the display device is delivered, after the display module, a light combining element, and the lens component are assembled, it is required to test whether the pixels that are used to emit the light on the display panels are one-to-one aligned. If the misalignment phenomenon occurs, the pixel calibration and the verification need to be performed through a process of step 1.1 to step 1.4 and a process of step 2.1 to step 2.4, until the misalignment phenomenon is eliminated, and then another structure is assembled. In this way, the pixels that are used to emit the light on the display panels in the display device that is just delivered are one-to-one aligned.

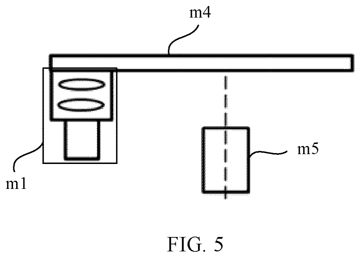

In addition, when whether the pixels that are used to emit the light on the display panels are one-to-one aligned is tested, if a structure after the display module, the light combining element, and the lens component are assembled is referred to as a semi-finished product m1, an image displayed by the semi-finished product m1 may be projected onto an imaging interface (for example, a projection screen) m2, as shown in FIG. 4. Then, an image presented on the imaging interface m2 is captured through a camera m3, to obtain the image presented through the lens component. Alternatively, if the semi-finished product m1 is used in an AR display device, the semi-finished product m1 may be further assembled with a waveguide lens element m4, as shown in FIG. 5. An image formed by image light emitted through the waveguide lens element m4 is taken through the human eye model camera m5, to obtain the image presented through the lens component. In addition, when the camera m3 or the human eye model camera m5 takes the image, a placement position needs to be set, that is, the camera m3 or the human eye model camera m5 needs to be disposed at an appropriate location, to take the image presented through the lens component. A specific placement position of the camera m3 or the human eye model camera m5 may be set based on an image display principle. For example, when the waveguide lens element is provided, the human eye model camera is disposed in an eyebox region (namely, a region in which an image presented through the waveguide lens element can be seen). When the image displayed by the semi-finished product is projected onto the imaging interface, the camera is disposed in a region in which the image on the imaging interface can be seen. This is not limited herein.

The following describes the pixel calibration process by using a specific embodiment.

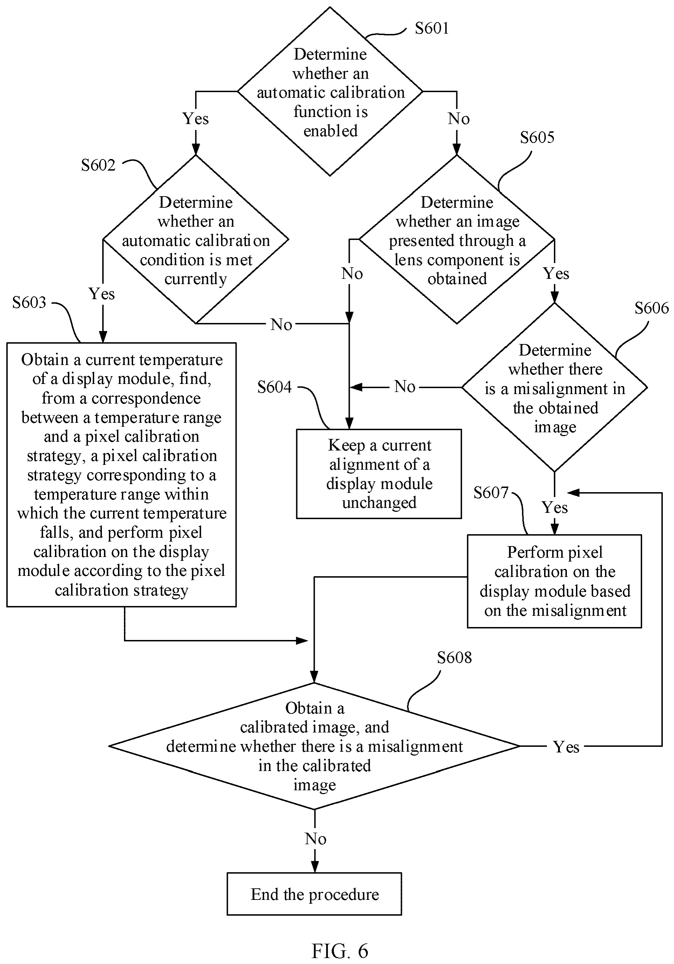

With reference to a flowchart shown in FIG. 6, the pixel calibration process includes the following steps.

S601: Determine whether the automatic calibration function is enabled; and perform S602 if the automatic calibration function is enabled; or perform S605 if the automatic calibration function is not enabled.

S602: Determine whether the automatic calibration condition is met currently; and perform S603 if the automatic calibration condition is met currently; or perform S604 is the automatic calibration condition is not met currently.

S603: Obtain the current temperature of the display module, find, from the correspondence between a temperature range and a pixel calibration strategy, the pixel calibration strategy corresponding to the temperature range within which the current temperature falls, and perform the pixel calibration on the display module according to the pixel calibration strategy; and perform S608.

S604: Keep a current alignment of the display module unchanged; and end the procedure.

S605: Determine whether the image presented through the lens component is obtained; and perform S606 if the image presented through the lens component is obtained; or return to S604 if the image presented through the lens component is not obtained.

S606: Determine whether there is a misalignment in the obtained image; and perform S607 if there is a misalignment in the obtained image; or return to S604 if there is no misalignment in the obtained image.

S607: Perform the pixel calibration on the display module based on the misalignment; and perform S608.

S608: Obtain the calibrated image, and determine whether there is a misalignment in the calibrated image; and return to S607 if there is a misalignment in the calibrated image; or end the procedure if there is no misalignment in the calibrated image.

The pixel calibration process mentioned in S603 and S607 may include: finding a to-be-calibrated display panel from the display panels, and determining a pixel that is used to emit light on the to-be-calibrated display panel. During display, the determined pixel is driven to emit the light, so that the pixels that are used to emit the light on the display panels can be one-to-one aligned, to eliminate the misalignment phenomenon, thereby improving the display effect.

Although embodiments of this application are described, a person skilled in the art can make changes and modifications to these embodiments after learning of a basic inventive concept. Therefore, the following claims are intended to be construed as to cover the embodiments and all changes and modifications falling within the scope of this application.

Clearly, a person skilled in the art can make various modifications and variations to embodiments of this application without departing from the spirit and scope of embodiments of this application. In this case, this application is also intended to cover these modifications and variations of embodiments of this application provided that they fall within the scope of the claims of this application and equivalent technologies thereof.

## Claims

1. A pixel calibration method for a display device, wherein the display device comprises a display module, a light combining element, and a lens component, the display module comprises a plurality of display panels, and at least one of the plurality of display panels is a monochrome display panel; the display panel comprises a plurality of pixels, and during display of the display panel, a part of the plurality of pixels emits light; the light combining element comprises a plurality of light incident surfaces and a light emergent surface, the plurality of display panels are respectively disposed on the light incident surfaces, the lens component is located on the light emergent surface, and the light combining element is configured to combine light emitted from the plurality of display panels, so that combined light forms an image through the lens component; and the method comprises:
obtaining a current temperature of the display module when an automatic calibration function is enabled and a preset automatic calibration condition is met;
determining, based on a preset correspondence between a temperature range and a pixel calibration strategy, a pixel calibration strategy corresponding to a temperature range within which the current temperature falls; and
finding a to-be-calibrated display panel from the plurality of display panels according to the determined pixel calibration strategy, and determining the pixel that is used to emit light on the to-be-calibrated display panel, so that the pixels that are used to emit light on the display panels are one-to-one aligned.

2. The method according to claim 1, further comprising:
after the current temperature is obtained, determining whether the current temperature and a temperature obtained when the preset automatic calibration condition is met last time fall within a same temperature range in the correspondence; and
if the current temperature and the temperature obtained when the preset automatic calibration condition is met last time fall within the same temperature range in the correspondence, keeping the pixels that are used to emit the light on the display panels unchanged; or
if the current temperature and the temperature obtained when the preset automatic calibration condition is met last time does not fall within the same temperature range in the correspondence, determining, based on the preset correspondence between a temperature range and a pixel calibration strategy, the pixel calibration strategy corresponding to the temperature range within which the current temperature falls.

3. The method according to claim 1, wherein the preset automatic calibration condition comprises:
a preset pixel calibration period arrives; and/or
when the display device is an AR display device, a packing away moment of the AR display device arrives.

4. The method according to claim 1, further comprising:
keeping the pixels that are used to emit the light on the display panels unchanged when the automatic calibration function is enabled but the preset automatic calibration condition is not met.

5. The method according to claim 1, further comprising:
when the automatic calibration function is not enabled, obtaining an image presented through the lens component;
determining whether the pixel in the obtained image is misaligned; and
when it is determined that the pixel in the obtained image is misaligned, finding a to-be-calibrated display panel from the plurality of display panels based on the misalignment, and determining the pixel that is used to emit light on the to-be-calibrated display panel, so that the pixels that are used to emit the light on the display panels are one-to-one aligned.

6. The method according to any one of claims 1 to 5, further comprising:
after the pixel that is used to emit the light on the to-be-calibrated display panel is determined, obtaining a calibrated image presented through the lens component after calibration;
determining whether the pixel in the calibrated image is misaligned; and
if the pixel in the calibrated image is not misaligned, determining that the pixels that are used to emit the light on the display panels are one-to-one aligned; or
if the pixel in the calibrated image is misaligned, refinding a to-be-calibrated display panel from the plurality of display panels based on the misalignment, and redetermining the pixel that is used to emit light on the to-be-calibrated display panel.

7. A display device, comprising a display module, a light combining element, a lens component, and a controller, wherein
the display module comprises a plurality of display panels, and at least one of the plurality of display panels is a monochrome display panel; and the display panel comprises a plurality of pixels, and during display of the display panel, a part of the plurality of pixels emits light;
the light combining element comprises a plurality of light incident surfaces and a light emergent surface, the plurality of display panels are respectively disposed on the light incident surfaces, the lens component is located on the light emergent surface, and the light combining element is configured to combine light emitted from the plurality of display panels, so that combined light forms an image through the lens component; and
the controller is configured to calibrate, by using the pixel calibration method according to any one of claims 1 to 6, at least a part of the pixels that are used to emit light on the display panel.

8. The display device according to claim 7, wherein three display panels are disposed, the three display panels are all monochrome display panels, and the three display panels are configured to emit light in different colors.

9. The display device according to claim 7 or 8, wherein the display device comprises an AR display device.

10. A computer storage medium, wherein the computer storage medium stores executable instructions, and when the executable instructions are executed by a computer, the control method according to any one of claims 1 to 6 is performed.
